# EUROPÄISCHE PATENTSCHRIFT

(11) **EP 1 247 823 B1**
(45) Veröffentlichungstag und Bekanntmachung des Hinweises auf die Patenterteilung: **29.03.2006**
(21) Anmeldenummer: 02007133.8
(22) Anmeldetag: 28.03.2002
(51) Int. Cl.: C08F 283/01, C09D 151/08, C09D 133/04, C08K 5/103, C08F 283/12, C09D 125/14

(54) **Niedermolekulare Polyesteracrylat-Bindemittel**
Low molecular polyester acrylate binding agent
Liant polyester-acrylate de bas poids moléculaire

(30) Priorität: 02.04.2001 DE 10116404
(43) Veröffentlichungstag der Anmeldung: 09.10.2002
(73) Patentinhaber: SYNTHOPOL CHEMIE Dr. rer. pol. Koch GmbH & CO. KG, 21614 Buxtehude (DE)
(72) Erfinder: Manuel dos Santos, Antonio, 21614 Buxtehude (DE)
(74) Vertreter: Schupfner, Georg

(56) Entgegenhaltungen:
- DE-A- 4 200 914
- US-A- 3 468 836
- US-A- 5 476 898

## Beschreibung

Gegenstand der Erfindung sind lösemittelhaltige Bindemittel herstellbar durch Polymerisation einer Polyesterkomponente und einer Acrylatkomponente.

Bindemittel für moderne Lacksysteme müssen eine Vielzahl von Anforderungen erfüllen. So müssen sie auf der einen Seite bestimmte lacktechnische Eigenschaften wie Kratzfestigkeit, Deckvermögen und Wetterbeständigkeit aufweisen, andererseits soll eine gute Verarbeitbarkeit, eine wirtschaftliche Herstellung und die Erfüllung gesetzlicher Auflagen gewährleistet sein.

Im Zuge eines gestiegenen Umweltbewußtseins ist in vielen Ländern der zulässige Anteil leichtflüchtiger Bestandteile, sogenannter "volatile organic compounds" (VOC) beschränkt. (H. Jotischky, Coatings under the legislative spectre, European Coatings J 1-2 (1996), 21-26). Aus diesem Grunde werden in letzter Zeit zunehmend wasserbasierte Bindemittel oder sogenannte High Solids zur Herstellung von Decklacken eingesetzt.

Unter High Solids werden Lacksysteme verstanden die einen Anteil organischer Lösemittel von weniger als 40 Gew.-%, häufig sogar weniger als 25 Gew.-% aufweisen. Üblicherweise können diese als 1-Komponenenten-, häufiger als 2-Komponenten-Systeme eingesetzt werden. Im Bereich von Decklacken bzw. Korrosionsschutzlacken für Außenanstriche im Maschinen- oder Schiffsbau werden häufig modifizierte Acrylatharze eingesetzt.

Bindemittel auf Basis von Acrylatpolymeren oder Acrylatcopolymeren, wie Polyester-Acrylaten bieten eine gute Verträglichkeit mit gängigen Lackbestandteilen wie Füllern, Pigmenten, Additiven und Farbstoffen. Zudem weisen sie ein hohes Deckvermögen und eine gute Chemikalien- und Wetterbeständigkeit auf.

Bindemittel auf Polyester-Acrylat Basis sind beispielsweise aus der EP 0 776 920 bekannt. Die dort beschriebenen Bindemittel mit Hydroxylzahlen zwischen 40 und 300 mg KOH/ g Festharz und Säurezahlen im Bereich von 3 bis 20 mg KOH/g Festharz werden zur Herstellung von Reaktionslacke für Metalle, Hölzer, Pappe und Kunststoffformteile eingesetzt.

Die Europäische Anmeldung EP 0 896 991 beschreibt Acrylatpolymerisate, die mit Polyestern oder Polyester-Oligomeren modifiziert sind. Die auf Basis dieser Bindemittel hergestellten Lacke zeichnen sich besonders durch ihre gute Wetter- und Chemikalienbeständigkeit aus. Vergleichbare Bindemittel sind auch aus der US 6,069,203 bekannt.

Nachteile der bekannten Polyester-Acrylate sind, daß diese bei ausreichenden VOC-Werten häufig nicht mehr das gewünschte Eigenschaftsprofil besitzen, beispielsweise keine ausreichende Chemikalien- und Wetterbeständigkeit aufweisen. Vielfach sind die entsprechenden Bindemittel so spröde, daß es bei einer Trocknung zur Rißbildung kommen kann.

Aufgabe der vorliegenden Erfindung ist es ein Bindemittel zur Herstellung von Decklacken bereitzustellen, daß die Nachteile des Stands der Technik überwindet, niedrigere Kosten bei der Herstellung verursacht als herkömmliche Systeme und insbesondere VOC-Werte von weniger als 420 Lösemittel g/l Lack, insbesondere kleiner 400 g/l aufweist, eine mittlere Molmasse von maximal 1500 g/mol (Mn) und eine gute Chemikalien - und Wetterbeständigkeit aufweist.

Die Aufgabe wird erfindungsgemäß gelöst durch ein lösemittelhaltiges Bindemittel herstellbar durch Polymerisation aus einer Polyesterkomponente und einer Acrylatkomponente, wobei das Bindemittel zu
- 20 bis 50 Gew.-% aus der Polyesterkomponente (A), und zu
- 80 bis 50 Gew.-% aus der Acrylatkomponente (B), bezogen auf die Summe von (A) und (B), hergestellt ist, dadurch gekennzeichnet, daß
- die Polyesterkomponente (A) 0,5 bis 10 Gew.-% eines methoxyfunktionellen Polysiloxans enthält bzw. daraus hergestellt ist, und
- die Acrylatkomponente (B) 12 bis 30 Gew.-% eines Glycidylesters einer gesättigten aliphatischen Monocarbonsäure mit 9 bis 12 C-Atomen, die am α-Kohlenstoffatom verzweigt ist,
enthält bzw. daraus hergestellt ist.

Das Bindemittel hergestellt aus (A) und (B) weist vorzugsweise eine Hydroxylzahl von 100-200 mg KOH/g Harz und eine Säurezahl von 0 - 20 mg KOH/g Harz auf.

Die Polyesterkomponete (A) enthält bzw. ist hergestellt aus:
- 35 bis 50 Gew.-% eines Polyols mit im Mittel 3 bis 5 Hydroxy-Gruppen, vorzugsweise 3,5 bis 4 Hydroxygruppen, insbesondere Trimethylolpropan, Di-Trimethylolpropan oder Pentaerythritol, bevorzugt 38 bis 45 Gew.-%,
- 45 bis 65 Gew.-% p-tert.-Butylbenzoesäure oder Hydroxybenzoesäure, bevorzugt 50 bis 60 Gew.-% und
- 0,5 bis 10 Gew.-% eines methoxyfunktionellen Polysiloxan, bevorzugt 0,5 bis 5 Gew.-%,
jeweils bezogen auf das Gesamtgewicht der Komponente (A).

Insbesondere sind Gegenstand der Erfindung Bindemittel deren Polyesterkomponente (A) eine zahlenmittlere Molmasse Mₙ gemessen mittels GPC gegen Polystyrolstandards von 400 bis 1000 g/mol, bevorzugt von 500 bis 800 g/mol hat und einen VOC-Wert von kleiner 400 g Lösemittel / 1 Lack, bevorzugt < 350 g/l gemessen nach DIN 53216 aufweist.

Geeignete methoxyfunktionelle Polysiloxane im Sinne der Erfindung sind z.B. Alkyl/Phenylsiliconharze mit Alkoxygruppen, wie beispielsweise Silres ® SY 231 der Firma Wacker. Die methoxyfunktionellen Polysiloxane können ggf. auch am Siliziumatom gebundene Kohlenwasserstoffgruppen und/oder andere alkoxy/aryloxy-gebundene Gruppen enthalten und weisen weiterhin bevorzugt eine niedrige Molmasse und/oder ein Alkoxyequivalent von 150 bis 300, vorzugsweise 220, auf.

Die Acrylatkomponente (B) enthält bzw. ist hergestellt aus neben mindestens einem Alkylester der Methacrylsäure, insbesondere der Methylmethacrylsäure, einen Hydroxyalkylester der Methacrylsäure, Acrylsäure und weitere vinylisch ungesättigte Monomere.

Die Acrylatkomponente (B) enthält bzw. ist hergestellt vorzugsweise aus:
- 35 bis 50 Gew.-% aromatische Vinylverbindungen,
- 10 bis 25 Gew.-% einen oder mehrere Hydroxyalkylester der (Meth)acrylsäure,
- 5 bis 20 Gew.-% einen oder mehrere Alkylesters der (Meth)acrylsäure,
- 3 bis 10 Gew.-% Acrylsäure und/oder Methacrylsäure und
- 12 bis 30 Gew.-% eines Glycidylester einer gesättigten aliphatischen Monocarbonsäure mit 9 - 12 C-Atomen, die am α-Kohlenstoffatom verzweigt ist, ist, bevorzugt ein Glycidylester der Versaticsäure ist,
jeweils bezogen auf das Gesamtgewicht der Komponente (B).

Die aromatische Vinylverbindung kann Styrol, α-Methylstyrol oder Vinyltoluol sein.

Als Hydroxyalkylester der Acrylsäure bzw. Methacrylsäure können erfindungsgemäß Hydroxyalkyl(meth)acrylatester mit 2 bis 5 Kohlenstoffatomen im Hydroxyalkylrest eingesetzt werden, wie beispielsweise Hydroxyethylacrylat, Hydroxyethylmethacrylat, Hydroxypropylmethacrylat, Hydroxypropylacrylat, Hydroxybutylmethacrylat, Hydroxybutylacrylat oder deren Mischungen.

Erfindungsgemäße Alkyester der (Meth)acrylsäure sind insbesondere Alkylester mit 1 bis 12 Kohlenstoffatomen im Alkylrest. Hierzu zählen beispielsweise Methylmethacrylat, Methacrylat, Ethylhexylacrylat, Ethylmethacrylat, Isobornyl-Metharcylat, n-Butylacrylat, n-Butylmethacrylat, iso-Butylacrylat, iso-Butylmethacrylat, tert.-Butylacrylat und tert.-Butylmethacrylat.

Als erfindungsgemäße Glycidylester werden Glycidylester einer gesättigten aliphatischen Monocarbonsäure mit 6 bis 12 C-Atomen, vorzugsweise 9 bis 11 Kohlenstoffatomen, die am α-Kohlenstoffatom verzweigt ist, eingesetzt. Bevorzugt werden Glycidy-lester, mit 10 Kohlenstoffatomen, wie sie unter dem Handelsnamen Cadura ® E 10 der Firma Shell vertrieben werden, eingesetzt.

Die Herstellung der erfindungsgemäßen Polyester (A) erfolgt in an sich bekannter Weise nach Methoden wie sie beispielsweise in "Ullmanns Encyclopädie der technischen Chemie", Verlag Chemie Weinheim, 4. Auflage (1980), Band 19, Seiten 61 ff. beschrieben sind. Die Veresterung erfolgt gegebenenfalls in Gegenwart einer katalytischen Menge eines üblichen Veresterungskatalysators, wie z. B. Säuren, Basen, oder Übergangsmetallverbindung, wie einwertige Basen bei ca. 80 bis 260°C, vorzugsweise 100 bis 230°C. Die Veresterungsreaktion wird so lange durchgeführt, bis die angestrebten Werte für die Hydroxyl- und Säurezahl erreicht sind. Es wird bevorzugt kein Veresterungskatalyator eingesetzt. Während der Veresterungsreaktion wird vorzugsweise das entstehende Methanol im wesentlichen vollständig abdestilliert, beispielsweise durch azeotrope Destillation.

Die Herstellung der erfindungsgemäßen Bindemittel kann entsprechend der dem Fachmann bekannten Verfahren als Lösungs- oder Massepolymerisation erfolgen, bevorzugt als Lösungspolymerisation. Dabei können Lösemittel mit Siedepunkten von 80°C bis 220°C, bevorzugt 125°C bis 185°C, für die Lösungspolymerisation eingesetzt werden. Bevorzugt eignen sich solche organischen Lösungsmittel, die auch in den fertigen Überzugsmitteln eingesetzt werden. Beispiele für solche Lösungsmittel sind: Glykolether, wie Ethylenglykoldimethylether, Glykoletherester; Ester, wie Butylglykolacetat, 3-Methoxy-n-butylacetat, Butyldiglykolacetat, Methoxypropyl-acetat, Ethoxypropylacetat, Ethyl-3-Ethoxypropionat, Isobutylacetat, Amylacetat; und Ketone, wie Methyl-n-amylketon, Methylethylketon, Methylisobutylketon, Düsobutylketon, Cyclohexanon, Isophoron; aromatische Kohlenwasserstoffe, wie Xylol. Shellsol® A der Shell und aliphatische Kohlenwasserstoffe können ebenfalls im Verschnitt mit den vorstehend genannten Lösungsmitteln eingesetzt werden. Insbesondere geeignet ist Butylacetat. Das durch Lösungspolymerisation erhaltene Bindemittel kann auch durch andere in der Lackindustrie übliche inerte organische Lösungsmittel, angepaßt an den Gebrauchszweck, verdünnt werden.

Die Polymerisation kann kontinuierlich oder diskontinuierlich (im sogenannte batch-Verfahren) durchgeführt werden. Bevorzugt wird die Polymerisation im Semibatchverfahren durchgeführt, d.h. das Lösemittel und ggf. Monomere oder/und Polyester im Reaktionsgefäß vorgelegt werden, während die weiteren Monomere und der Initiator über einen oder mehrere Zuläufe in einer Zeit von 2 bis 15 h, bevorzugt 3 bis 8 h zudosiert werden.

Für die Herstellung der erfindungsgemäßen Bindemittel können übliche Polymerisationsinitiatoren, einzeln oder im Gemisch, eingesetzt werden. Hierzu zählen aliphatische Azoverbindungen, Diacylperoxide, Peroxydicarbonate, Alkylperester, Alkylhydroperoxide, Perketale, Dialkylperoxide oder Ketonperoxide. Bevorzugt werden Dialkylperoxide, wie Di-t-butylperoxid, Dibenzoylperoxide oder Di-t-amylperoxid, und Alkylperester, wie t-Butylperoxy-2-ethylhexanoat, t-Amylperoxy-2-ethylhexanoat, 1,1-Di-(t-Amylperoxy)cyclohexan, 1.1. Di-(tert.-Butylperoxy) cyclohexan, t-Amylperoxyacetat, Ethyl-3,3-di-(t-amylperoxy)butyrat, 3-Ethyl-pent-3-yl-peroxy-2-ethylhexanoat und Di-(3-ethyl-pent-3-yl)-peroxid, eingesetzt. Weiterhin seien genannt 2,5-Dimethyl-2,5-di-(tert.-butylperoxy)-hexan-(3), tert.-Butylperoxybenzoat, tert.-Butylperoxy-3,5,5-trimethylhexanoat, 2,5-Dimethyl-2,5-di(benzoylperoxy)-hexan, 00-tert-Butyl-0-(isopropylmonoperoxy)-hexan, 00-tert-Butyl-0-(2-ethylhexyl)-monoperoxycarbonat, 2,5-Dimethyl-2,5-di-(tert.-butylperoxy)-hexan, Dicumylperoxid, tert.-Butylhydroperoxid, tert.-Amylhydroperoxid, Cumylhydroperoxid, 2,5-Dimethyl-2,5-dihydroperoxyhexan, Diisopropylbenzolmonohydroperoxid und 2,2-Azo-di(2-acetoxypropan).

Der Anteil der Initiatoren kann z. B. 1 bis 8, vorzugsweise bis 6, insbesondere bis 5 Gew.-%, bezogen auf das Gesamtgewicht der Ausgangskomponenten, betragen. Geeignete Polymerisationsgemische bestehen z. B. aus Di-tert.-Butylperoxid und Dibepzoylperoxid, tert.-Butylper-2-ethyl-hexanoat und Di- tert.-Amylperoxid, tert.-Butylper-2-ethylhexanoat und Di-tert.-Butylperoxid, tert.-Butylper-2-ethylhexanoat und.1,1-Di(tert.-Butylperoxycyclohexan, tert.-Butylper-2-ethylthexanoat und Dibenzoylperoxid, jedoch sind auch andere Gemische gut brauchbar.

Die erfindungsgemäßen Bindemittel werden zur Herstellung von Decklacken und Korrosionsschutzlacken insbesondere im Schiffsbau, Landmaschinenbau und eingesetzt. Weitere geeignete Einsatzgebiete sind Schutzlacke für Offshore-Bohrinseln oder Brücken. Insbesondere geeignet ist das erfindungsgemäße Bindemittel für Dickschichtsystem im Airless-Auftrag mit zum Beispiel Schichtdicken von größer 60 µm Trockenfilmschichtdicke. Die erfindungsgemäßen Decklacke weisen eine hohe Chemikalienbeständigkeit und Wetterbeständigkeit auf

Die erfindungsgemäße Decklacke sind gemäß den herkömmlich angewendeten Tests beständig gegen Chemikalien wie Kerosin-, Benzin, -Diesel- oder Skydrol.

Die zur Vernetzung der erfindungsgemäßen Bindemittel verwendbaren Polyisocyanate sind lacktypische Polyisocyanate.

Der Anteil an Polyisocyanat-Vemetzer wird so gewählt, daß auf eine Hydroxylgruppe der Bindemittelinischung 0,5 bis 1,5 Isocyanat-Gruppen entfallen. Überschüssige Isocy anat-Gruppen können durch Feuchtigkeit abreagieren und zur Vernetzung beitragen. Es können aliphatische, cycloaliphatische und aromatische Polyisocyanate verwendet werden wie Hexamethylendiisocyanate, Trimethylhexamethylendiisocyanat, Isophorondiisocanate, 4,4'-Diisocyanatodicyclohexylmethan, Toluylen-2,4-diisocyanat,o-,m- und p-Xylylendiisocyanat, 4,4'-Diisocyanatodiphenylmethan; verkappte Polyisocyanate wie mit CH-, NH- oder OH-aciden Verbindungen verkappte Polyisocyante; sowie z. B. Biuret-, Allophanat-, Urethan- oder Isocyanurat-Gruppen enthaltende Polyisocyanate. Beispiele für derartige Polyisocyanate sind ein Biuretgruppen enthaltendes Umsetzungsprodukt aus 3 Molen Hexamethylentdiisocyanat mit 1 Mol Wasser mit einem NCO-Gehalt von ca. 22% (entsprechend dem Handelsprodukt Desmodur ® N der BAYER AG; ein Isocyanatgruppen enthaltendes Polyisocyanat, das durch Trimerisierung von 3 Molen Hexamethylendiisocyanat hergestellt wird mit einem NCO-Gehalt von etwa 21,5 % (entsprechend dem Handelsprodukt Desmodur ® N 3390 BAYER AG oder Urethangruppen enthaltende Polyisocyanate, welche Reaktionsprodukte darstellen aus 3 Molen Toluylendiisocyanat und 1 Mol Trimethylolpropan mit einem NCO-Gehalt von etwa 17,5% (entsprechend dem Handelsprodukt Desmodur ® L BAYER AG. Bevorzugt eingesetzt werden Desmodur ® N und Desmodur ® N 3390 BAYER AG.

In den bei der erfindungsgemäßen Verwendung zum Einsatz gelangenden Zweikomponenten-Polyurethanlacken liegen die Bindemittelkomponente und die Polyisocyanatkomponente in einem Äquivalentverhältnis von Isocyanatgruppen zu Hydroxylgruppen von 2:1 bis 1:2, vorzugsweise 1,5:1 bis 1:1,5, vor. Die durch Vermischen der beiden Komponenten erhaltenen Zweikomponenten-Bindemittel haben nur eine begrenzte Verarbeitungszeit von ca. 2 bis 48 Stunden und werden unter Mitverwendung der üblichen Hilfs- und Zusatzmittel verarbeitet. Diese gegebenenfalls mitzuverwendenden Hilfs- und Zusatzmittel können entweder dem Gemisch oder den Einzelkomponenten vor deren Durchmischung hinzugefügt werden.

Die Herstellung der Decklacke erfolgt nach den dem Fachmann bekannten Verfahren. Dabei wird das Bindemittel ggf, mit Lösemittel angelöst und auf die gewünschte Viskosität eingestellt bevor Pigmente, Farbteilchen Füller und/oder Additive im Bindemittel dispergiert werden. Bei 2-Komponenten-Systemem wird in einem weiteren Schritt die Härterkomponente zugegeben. Nach Einmischen ist der Lack nur noch für einen begrenzten Zeitraum, der als Topfzeit bezeichnet wird verarbeitbar.

Die Einsatz der erfindungsgemäßen Lacke kann auch als Einkomponentensystem beispielsweise in Einbrennlacken erfolgen. Die OH-Gruppenhaltigen Polymere können durch Zusatz von Melamin- oder Harnstoffharzen vernetzt werden.

### Beispiele

### Beispiel 1: Herstellung der Polyesterkomponente A

In einem Reaktionskessel mit Rückflußkühler, Wasserabscheider, Rührwerk und Stickstoffzuleitung wird mit Stickstoff gespült und dann mit Butylacetat, Di.-Trimethylolpropan, p.-tert.Butylbenzoesäure und Sylres SY 231 in den in Tabelle 1 angegebenen Mengen befüllt. Das Reaktionsgemisch wurde unter Stickstoffzufuhr auf 165°C Kesseltemperatur erhitzt und die Temperatur innerhalb von etwa 5 h auf 220°C erhöht. Während der gesamten Reaktionszeit wird entstehendes Reaktionswasser azeotrop, ca. 5,1 Gew.-% (bezogen auf die Gesamtzusammensetzung), abdestilliert. Gleichzeitig wird auch das entstehende Methanol aus dem Gemisch mit abdestilliert. In halbstündigen Abständen werden Proben gezogen und die Säurezahl des Reaktionsgemischs bestimmt, bis eine SZ von 6,5 bis 7 erreicht ist. Bei Erreichen der Säurezahl wird der Kessel auf 130°C abgekühlt und weitere 3,3 kg Butylacetat zugesetzt.

**Tabelle 1 Mengenangaben der zur Polyesterherstellung eingesetzten Rohstoffe**

| **Rohstoff** | **Anteil in Gew.-%** |
|---|---|
| Di.-Trimethylolpropan | 39,5 |
| p.tert. Butylbenzoesäure | 51,4 |
| Silres SY 231 | 4,4 |
| Butylacetat | 4,7 |

Nach Verdünnung der Polyesterkomponente mit 3,3 kg Butylacetat wurden folgende Kenndaten erhalten:
- Feststoffgehalt:: 90 % 1 h bei 125°C in Ethylacetat DIN 53216
- Viskosität:: 140 mPas bei 23°C, 70% FK in Butylacetat DIN 53019
- Säurezahl:: 6,8
- Hydroxylzahl: 182

### Beispiel 2: Herstellung des Polyester-Acrylatbindemittels

In ein Polymerisationsgetäß mit Tropftrichter, Rührer und Kühlaufsatz mit Wasserabscheider wurden Polyester gemäß Beispiel 1 als Polyesterkomponente A, Cardura ® E 10 eingefüllt und auf 194°C erhitzt. Die Rohstoffe wurden in dem in Tabelle 2 angegebenen Verhältnis eingesetzt. Im Verlaufe von 6 Stunden wurden bei der gleichen Temperatur ein Monomeren- und Initiatorengemisch aus Hydroxyethylmethacrylat, Styrol, Acrylsäure und Butylmethacrylat gleichmäßig zudosiert. Nach beendeter Zugabe wurde noch bei gleicher Temperatur 4 Stunden nachpolymerisiert.
Das erhaltene Bindemittel hat, bezogen auf den Feststoffanteil, eine Säurezahl von < 8 mg KOH/g Festharz und eine errechnete Hydroxylzahl von 144 mg KOH/g Festharz. Der Feststoffanteil beträgt vor Verdünnung 96,5 Gew.-%.

**Tabelle 2 . Mengenangaben der zur Bindemittelherstellung eingesetzten Rohstoffe**

| **Rohstoff** | **Anteil in Gew.-%** |
|---|---|
| Polyester 90%ig nach Beispiel 1 | 31,64 |
| Cardura E 10 | 14,24 |
| Styrol | 28,49 |
| Butylmethacrylat | 7,89 |
| Hydroxyethylmethacrylat | 11,75 |
| Acrylsäure | 4,09 |
| Kaliumhydroxid | 0,001 |
| Di-tert. Amylperoxid | 1,90 |

Nach Verdünnung des Bindemittels mit 20 kg Butylacetat wurden folgende Kenndaten erhalten:

| | | |
|---|---|---|
| Feststoffgehalt: | 81 % | 1 h bei 125°C in Ethylacetat, DIN 53216 |
| Viskosität: | 4280 mPas | bei 23°C, 70% FK in Butylacetat, DIN 53019 |
| Säurezahl: | 4,9 | |
| Hydroxylzahl | 142 | |
| Farbzahl | 0,2 Gardner | |

### Beispiel 3: Herstellung eines Decklacks mit Bindemittel aus Beispiel 2

Das entsprechend Beispiel 2 hergestellte Bindemittel wird mit Butylacetat auf einen Feststoffanteil von 80 % eingestellt. Die Komponenten werden entsprechend den in Tabelle 3 angegebenen Mengen in einer Perlenmühle 1:1 mit Perlen gegeben und 30 min dispergiert.

**Tabelle 3 Herstellung eines Weißlackes**

| **Rohstoffe** | **Anteil in Gew.-%** |
|---|---|
| Bindemittel nach Beispiel 2 80% | 33 |
| Byk 162¹ | 3 |
| Ethoxypropylacetat | 8 |
| Kronos 2160² | 34 |
| Bentone 38³ 10% in X + 4 % Bykumen⁴ 30 min. dispergieren | 2 |
| Synthalat A-148 HS / 80% | 10 |
| Byk 344⁵ 10% in X | 3 |
| Byketol⁶ OK | 3 |
| DBTL 1 % in Xylol | 0,5 |
| Butylacetat | 3,5 |
| Gesamtgewicht | 100 |

| | |
|---|---|
| 1. Byk 162 ist ein Netzmittel, hergestellt von der Fa. Byk-Chemie GmbH | |
| 2 Kronos 2160 ist ein Titandioxidpigment der Fa. Kronos | |
| 3 Bentone 38 ist ein Antiabsetzmittel der Fa. Byk Chemie | |
| 4 Bykumen ist eine Lösung eins niedermolekularen ungesättigten sauren Polycarbonsäurepolyesters, hergestellt von der Fa. Byk-Chemie GmbH | |
| 5 Byk 344 ist eine Lösung eines polyethermodifizierten Polydimethylsiloxans, hergestellt von der Fa. Byk-Chemie GmbH | |
| 6 Byketol OK ist eine Kombination hochsiedender Aromaten, Ketone und Ester, vertrieben von der Fa. Byk-Chemie GmbH | |

Die erhaltenen Dispersion wird im Verhältnis 100:18 mit dem Isocyanathärter Desmodur ® N 3390 90% versetzt.

| | | |
|---|---|---|
| | Lackvormischungen Beispiel 3 | 100 |
| | Desmodur ® N 3390 90% | 18 |
| | Verdünnung Bd 1316 | 3 |

| Verdünnung Bd 1316: | | |
|---|---|---|
| | Ethoxypropylacetat | 25 |
| | Butylacetat | 25 |
| | Butoxyl | 5 |
| | Shellsol A | 20 |
| | Xylol | , 25 |

Für diese Lackzubereitung werden folgende Kenndaten erhalten:

**Tabelle 4 Kenndaten**

| **Topfzeit in sek.** | | | |
|---|---|---|---|
| Sofort | 21 | 3 h | 27 |
| 1h | 24 | 4 h | 31 |
| 2 h | 25 | 5 h | 34 |
| Feststoffgehalt | 71,7% | | 1h 110°C, DIN 53211 |
| Dichte | 1,2611 | | bei 20°C |
| Lsgm. g/l | 357 | | |
| VOC | 283 | | |

**Testlackierung: Stahlplatten, Füller Basis SA 085, 60 min. 80°C + 1 d**

| | |
|---|---|
| Füller | 31 bis 33 µm |
| Lack | 90 µm |
| Glanz < 60° | 96% |
| Pendelhärte | 125 sek. |
| Erichson-Tiefung | 8.7 mm |
| Chemikalienbeständigkeit 5 min Diesel | i.O. |
| Chemikalienbeständigkeit 5 min Super, Bleifrei | i.O. |

**Pendelhärte auf Glas, 150 m Naßfilm in sek**

| | |
|---|---|
| 30 min., bei 60 °C + 1h | 31 |
| 30 min., bei 60 °C + 1d | 56 |
| 30 min., bei 80 °C + 1h | 79 |
| 30 min., bei 80 °C + 1d | 94 |
| Luftgetrocknet + 1d | 18 |
| Luflgetrocknet + 4d | 106 |
| Luftgetrocknet + 7d | 106 |
| Luftgetrocknet + 10d | 110 |

## Patentansprüche

1. Lösemittelhaltiges Bindemittel herstellbar durch Polymerisation aus einer Polyesterkomponente und einer Acrylatkomponente, wobei das Bindemittel zu
- 20 bis 50 Gew.-% aus der Polyesterkomponente (A), und zu
- 80 bis 50 Gew.-% aus der Acrylatkomponente (B), bezogen auf die Summe von (A) und (B), hergestellt ist, **dadurch gekennzeichnet, daß**
- die Polyesterkomponente (A) 0,5 bis 10 Gew.-% eines methoxyfunktionellen Polysiloxans enthält bzw. daraus hergestellt ist, und
- die Acrylatkomponente (B) 12 bis 30 Gew.-% eines Glycidylesters einer gesättigten aliphatischen Monocarbonsäure mit 9 bis 12 C-Atomen, die am α-Kohlenstoffatom verzweigt ist,
enthält bzw. daraus hergestellt ist.

2. Bindemittel gemäß 1, **dadurch gekennzeichnet, daß** die Polyesterkomponete (A)
- 35 bis 50 Gew.-% eines Polyols mit im Mittel 3 bis 5 Hydroxy-Gruppen,
- 45 bis 65 Gew.-% p-tert.-Butylbenzoesäure oder Hydroxybenzoesäure und
- 0,5 bis 10 Gew.-% eines methoxyfunktionellen Polysiloxans
enthält bzw. daraus hergestellt ist, jeweils bezogen auf das Gesamtgewicht der Komponente (A).

3. Bindemittel gemäß einem der Ansprüche 1 oder 2, **dadurch gekennzeichnet, daß** die Acrylatkomponente (B) enthält bzw. hergestellt ist aus:
- 35 bis 50 Gew.-% aromatischen Vinylverbindungen,
- 10 bis 25 Gew.-% einem oder mehreren Hydroxyalkylestern der (Meth)acrylsäure,
- 5 bis 20 Gew.-% einem oder mehreren Alkylestern der (Meth)acrylsäure,
- 3 bis 10 Gew.% Acrylsäure und/oder Methacrylsäure und
- 12 bis 30 Gew.-% eines Glycidylesters einer gesättigten aliphatischen Monocarbonsäure mit 9 bis 12 C-Atomen, die am α-Kohlenstoffatom verzweigt ist, vorzugsweise einem Glycidylesters der Versaticsäure,
jeweils bezogen auf das Gesamtgewicht der Komponente (B).

4. Bindemittel gemäß einem der vorhergehenden Ansprüche, **dadurch gekennzeichnet, daß** das Polyol mit im Mittel 3 bis 5 Hydroxy-Gruppen Trimethylolpropan, Di-Trimethylolpropan oder Pentaerythritol oder deren Mischungen ist.

5. Bindemittel gemäß einem der vorhergehenden Ansprüche, **dadurch gekennzeichnet, daß** das Bindemittel zu
- 25 bis 40 Gew.-% aus der Polyesterkomponente (A), und zu
- 60 bis 75 Gew.-% aus der Acrylatkomponente (B),
bezogen auf die Summe von (A) und (B), hergestellt ist.

6. Bindemittel gemäß einem der vorhergehenden Ansprüche, **dadurch gekennzeichnet, daß** das Bindemittel zu
- 27 bis 35 Gew.-% aus der Polyesterkomponente (A), und zu
- 65 bis 73 Gew.-% aus der Acrylatkomponente (B),
bezogen auf die Summe von (A) und (B), hergestellt ist.

7. Bindemittel gemäß einem der vorhergehenden Ansprüche, **dadurch gekennzeichnet, daß** die Polyesterkomponete (A)
- 38 bis 45 Gew.-% eines Polyols mit im Mittel 3 bis 5 Hydroxy-Gruppen,
- 50 bis 60 Gew.-% p-tert.-Butylbenzoesäure oder Hydroxybenzoesäure,
- 0,5 bis 5 Gew.-% eines methoxyfunktionellen Polysiloxan
enthält bzw. daraus hergestellt ist, jeweils bezogen auf das Gesamtgewicht der Komponente (A).

8. Bindemittel gemäß einem der vorhergehenden Ansprüche, **dadurch gekennzeichnet, daß** das Bindemittel eine Hydroxylzahl von 100 bis 200 mg KOH/g Harz aufweist.

9. Bindemittel gemäß einem der vorhergehenden Ansprüche, **dadurch gekennzeichnet, daß** das Bindemittel eine Säurezahl von 0 bis 20 mg KOH/g Harz aufweist.

10. Bindemittel gemäß einem der vorhergehenden Ansprüche, **dadurch gekennzeichnet, daß** die aromatische Vinylverbindung Styrol ist und/oder daß als Hydroxyalkylester Hydroxyethylacrylat, Hydroxyethylmethacrylat oder Hydroxypropylmethacrylat eingesetzt werden.

11. Bindemittel gemäß einem der vorhergehenden Ansprüche, **dadurch gekennzeichnet, daß** ein Glycidylester einer gesättigten aliphatischen Monocarbonsäure mit 9 bis 11 C-Atomen eingesetzt wird.

12. Decklack, hergestellt unter Verwendung des Bindemittels gemäß einem der vorhergehenden Ansprüche, **dadurch gekennzeichnet, daß** der Decklack einen VOC-Wert von kleiner 420 g Lösungsmittel / 1 Lack aufweist.

## Revendications

1. Liant contenant du solvant, susceptible d'être obtenu par polymérisation à partir d'un composant de polyester et d'un composant d'acrylate, sachant que le liant est préparé à raison
- de 20 à 50 % en poids en composant de polyester (A) et
- de 80 à 50 % en poids en composant d'acrylate (B), rapportés à la somme de (A) et (B), **caractérisé en ce que**
- le composant de polyester (A) contient ou est préparé à partir de 0,5 à 10 % en poids d'un polysiloxane à fonction méthoxyle, et
- le composant acrylate (B) contient ou est préparé à partir de 12 à 30 % en poids d'un ester de glycidyle d'un acide monocarboxylique aliphatique saturé ayant de 9 à 12 atomes de carbone, qui est ramifié sur l'atome de carbone en α.

2. Liant selon la revendication 1, **caractérisé en ce que** le composant polyester (A) contient ou est préparé à partir de
- 35 à 50 % en poids d'un polyol ayant en moyenne 3 à 5 groupes hydroxyle,
- 45 à 65 % en poids d'acide p-tert.-butylbenzoïque ou hydroxybenzoïque et
- 0,5 à 10 % en poids d'un polysiloxane à fonction méthoxyle, rapportés respectivement au poids total du composant (A).

3. Liant selon l'une des revendications 1 ou 2, **caractérisé en ce que** le composant acrylate (B) contient, ou est préparé à partir de :
- 35 à 50 % en poids de composés vinyliques aromatiques,
- 10 à 25 % en poids d'un ou de plusieurs esters d'hydroxyalkyle de l'acide (méth)acrylique,
- 5 à 20 % en poids d'un ou de plusieurs esters d'alkyle de l'acide (méth)acrylique,
- 3 à 10 % en poids d'acide acrylique et/ou d'acide méthacrylique et
- 12 à 30 % en poids d'un ester de glycidyle d'un acide monocarboxylique aliphatique saturé ayant de 9 à 12 atomes de carbone, qui est ramifié sur l'atome de carbone en α, de préférence un ester de glycidyle de l'acide versatique, rapportés respectivement au poids total du composant (B).

4. Liant selon l'une des revendications précédentes, **caractérisé en ce que** le polyol ayant en moyenne 3 à 5 groupes hydroxyles est du triméthylolpropane, du di- triméthylolpropane ou du pentaérythritol ou leurs mélanges.

5. Liant selon l'une des revendications précédentes, **caractérisé en ce que** le liant est préparé à raison:
de 25 à 40 % en poids en composant de polyester (A) et
de 60 à 75 % en poids en composant d'acrylate (B),
rapportés à la somme de (A) et de (B).

6. Liant selon l'une des revendications précédentes, **caractérisé en ce que** le liant est préparé à raison de 27 à 35 % en poids en composant de polyester (A) et
- de 65 à 73 % en poids en composant d'acrylate (B), rapportés à la somme de (A) et de (B).

7. Liant selon l'une des revendications précédentes, **caractérisé en ce que** le composant de polyester (A) contient ou est préparé à partir de :
- 38 à 45 % en poids d'un polyol ayant en moyenne 3 à 5 groupes hydroxyle,
- 50 à 60 % en poids d'acide p-tert.-butylbenzoïque ou hydroxybenzoïque et
- 0,5 à 5 % en poids d'un polysiloxane à fonction méthoxyle,
rapportés respectivement au poids total du composant (A).

8. Liant selon l'une des revendications précédentes, **caractérisé en ce que** le liant présente un indice d'hydroxyle de 100 à 200 mg de KOH/g de résine.

9. Liant selon l'une des revendications précédentes, **caractérisé en ce que** le liant présente un indice d'acidité de 0 à 20 mg de KOH/g de résine.

10. Liant selon l'une des revendications précédentes, **caractérisé en ce que** le composé vinylique aromatique est du styrol et/ou **en ce que** l'on utilise comme ester d'hydroxyalkyle de l'acrylate d'hydroxyéthyle, du méthacrylate d'hydroxyéthyle, ou du méthacrylate d'hydroxypropyle.

11. Liant selon l'une des revendications précédentes, **caractérisé en ce qu'**on utilise un ester de glycidyle d'un acide monocarboxylique aliphatique saturé ayant 9 à 11 atomes de carbone.

12. Laque couvrante, préparée moyennant l'utilisation du liant selon l'une des revendications précédentes, **caractérisée en ce que** la laque couvrante présente un indice VOC de moins de 420 g de solvant / 1 de laque.

## Claims

1. Solvent containing bonding agent, capable of being manufactured by polymerisation from a polyester component and an acrylate component, wherein the bonding agent is manufactured to
- 20 to 50% by weight from the polyester component (A), and to
- 80 to 50% by weight from the acrylate component (B), related to the sum of (A) and (B), **characterised in that**
- the polyester component (A) contains 0.5 to 10% by weight of a methoxy-functional polysiloxane or is manufactured from it, and
- the acrylate component (B) contains 12 to 30% by weight of a glycidyl ester of a saturated aliphatic monocarbonic acid with 9 to 12 C atoms, which is branched on the α-carbon atom,
or is manufactured from it.

2. Bonding agent according to 1, **characterised in that** the polyester component (A) contains
- 35 to 50% by weight of a polyol with an average of 3 to 5 hydroxy groups,
- 45 to 65% by weight of p-tert.-butyl benzoic acid or hydroxybenzoic acid, and
- 0,5 to 10% by weight of a methoxy-functional polysiloxane
or is manufactured from it, each related to the total weight of component (A).

3. Bonding agent according to any of Claims 1 or 2, **characterised in that** the acrylate component (B) contains or is manufactured from:
- 35 to 50% by weight of aromatic vinyl compounds,
- 10 to 25% by weight of one or more hydroxyalkyl esters of the (meth)acrylic acid
- 5 to 20% by weight of one or more alkyl esters of the (meth)acrylic acid
- 3 to 10% by weight of acrylic acid and/or methacrylic acid and
- 12 to 30% by weight of acrylic acid and/or methacrylic acid and
- 12 to 30% by weight of a glycidyl ester of a saturated aliphatic monocarbonic acid with 9 to 12 C atoms, which is branched on the α-carbon atoms, preferably a glycidyl ester of the versatic acid,
each related to the total weight of the component (B).

4. Bonding agent according to any one of the preceding claims, **characterised in that** the polyol with an average of 3 to 5 hydroxy groups is trimethylol propane, ditrimethylol propane or pentaerythritol or their mixtures.

5. Bonding agent according to any one of the preceding claims, **characterised in that** the bonding agent is manufactured to
- 25 to 40% by weight from the polyester component (A), and to
- 60 to 75% by weight from the acrylate component (B),
related to the sum of (A) and (B).

6. Bonding agent according to any one of the preceding claims, **characterised in that** the bonding agent is manufactured to
- 27 to 35% by weight from the polyester component (A), and to
- 65 to 73% by weight from the acrylate component (B),
related to the sum of (A) and (B).

7. Bonding agent according to any one of the preceding claims, **characterised in that** the polyester component (A)
contains or is manufactured from
- 38 to 45% by weight of a polyol with an average of 3 to 5 hydroxy groups,
- 50 to 60% by weight of p-tert.-butylbenzoic acid or hydroxybenzoic acid,
- 0.5 to 5% by weight of a methoxy-functional polysiloxane,
related to the total weight of the component (A).

8. Bonding agent according to any one of the preceding claims, **characterised in that** the bonding agent has a hydroxyl number from 100 to 200 mg of KOH/g of resin.

9. Bonding agent according to any one of the preceding claims, **characterised in that** the bonding agent has an acid number from 0 to 20 mg of KOH/g of resin.

10. Bonding agent according to any one of the preceding claims, **characterised in that** the aromatic vinyl compound is styrol and/or **in that** as hydroxyalkyl ester hydroxyethyl acrylate, hydroxyethyl methacrylate or hydroxypropyl methacrylate are used.

11. Bonding agent according to any one of the preceding claims, **characterised in that** a glycidyl ester of a saturated aliphatic monocarbonic acid with 9 to 11 C atoms is used.

12. Coating varnish manufactured from the bonding agent according to any one of the preceding claims, **characterised in that** the top coat of varnish has a VOC value of less than 420 g of solvent / 1 of varnish.
